(19) Europäisches Patentamt
European Patent Office
Office européen des brevets

(11) **EP 3 125 201 A1**

(12) **DEMANDE DE BREVET EUROPEEN**

(43) Date de publication:
**01.02.2017 Bulletin 2017/05**

(51) Int Cl.:
***G07C 9/00*** *(2006.01)*

(21) Numéro de dépôt: **16181713.5**

(22) Date de dépôt: **28.07.2016**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **29.07.2015 FR 1557274**

(71) Demandeur: **Docapost Iot
94220 Charenton-le-Pont (FR)**

(72) Inventeurs:
• **LELEU, Jean-Luc
75005 Paris (FR)**
• **VILLIERS, Eric
75015 Paris (FR)**

(74) Mandataire: **de Roquemaurel, Bruno et al
OMNIPAT
24 Place des Martyrs de la Résistance
13100 Aix en Provence (FR)**

(54) **PROCEDE DE COMMANDE D'OUVERTURE D'UNE SERRURE PAR CODE A USAGE UNIQUE**

(57)     L'invention concerne un procédé de de commande d'un dispositif de serrure (LKSS), le procédé comprenant des étapes consistant à : transmettre par un terminal d'utilisateur (UT) à un serveur distant (SRV), un identifiant d'utilisateur (UID) et un identifiant de dispositif de serrure (LID), déterminer par le serveur si l'utilisateur correspondant à l'identifiant d'utilisateur reçu est habilité à ouvrir le dispositif correspondant à l'identifiant de dispositif de serrure reçu, générer par le serveur un code d'ouverture (KC) en appliquant une fonction cryptographique (CF) à un index (SX) et à une donnée (LID, LK) liés à l'identifiant de dispositif de serrure reçu, transmettre le code d'ouverture généré au dispositif via le terminal, déclencher l'ouverture du dispositif si le code d'ouverture transmis se trouve parmi des codes d'ouverture non utilisés, dans une table de codes d'ouverture (TKC) mémorisée dans le dispositif, et mémoriser par le dispositif l'utilisation du code d'ouverture transmis.

Fig. 2

EP 3 125 201 A1

## Description

La présente invention concerne les dispositifs de serrure commandés au moyen d'une clé dématérialisée se présentant sous la forme d'un code, cette clé étant véhiculée par un objet portatif détenu par l'utilisateur. L'objet portatif, lorsqu'il est approché de la serrure, transmet la clé à la serrure pour commander l'ouverture de cette dernière.

La présente invention s'applique notamment au contrôle de l'ouverture d'une porte d'accès à un lieu tel qu'un bâtiment ou un local, ou bien d'un coffre, tel qu'un coffre de consigne ou de véhicule. La présente invention peut également s'appliquer à des boites à colis utilisées par un livreur pour déposer un colis pour un destinataire absent lors de la livraison. Le livreur demande à un serveur distant l'accès à une boite à colis, et si cette dernière est libre, il reçoit un code d'ouverture. Lorsqu'un colis est ainsi déposé dans la boite à colis, le destinataire est notifié de sa livraison dans la boite à colis. Pour retirer son colis de la boite à colis, le destinataire doit demander un code d'ouverture de cette dernière au serveur distant.

Il existe de nombreux systèmes de cartes ou badges à microcircuit mettant en oeuvre une liaison sans fil avec le dispositif de serrure, généralement un couplage par induction. Ce couplage assure une communication bidirectionnelle entre le dispositif de serrure et le badge, permettant notamment à la serrure de lire dans la mémoire du badge une donnée d'ouverture et de commander l'ouverture si cette donnée est reconnue conforme. Cette technique présente les mêmes inconvénients qu'une clé classique, notamment dans la mesure où elle conduit à la multiplication de badges, un badge spécifique devant être remis à chacun des utilisateurs habilités à ouvrir une serrure, et pour chaque serrure qu'ils sont habilités à ouvrir. En outre, si l'on souhaite supprimer des habilitations existantes ou en créer de nouvelles, il faut soit procéder au retrait ou à l'échange d'un badge, soit mettre à jour la mémoire de celui-ci ou du dispositif de serrure, au moyen d'un protocole ou d'un lecteur spécifique.

Certains systèmes utilisent un téléphone mobile pour transmettre un code d'ouverture à un dispositif de serrure, sous la forme d'une série de tonalités, par exemple des tonalités DTMF (Dual Tone Multi-Frequency signaling), émises par le haut-parleur du téléphone. Un serveur distant avec lequel le téléphone mobile peut communiquer, distribue des codes d'ouverture, en fonction d'identifiants d'un utilisateur et d'une serrure. Le dispositif de serrure est configuré pour capter ce code au moyen d'un microphone, le vérifier, et déclencher l'ouverture de la serrure si ce code correspond à une valeur attendue.

Dans un tel système, il a également été envisagé d'utiliser une liaison NFC (Near Field Communication), pour transmettre le code d'ouverture entre le téléphone mobile et le dispositif de serrure, un élément sécurisé tel qu'une carte UICC (Universal Integrated Circuit Card) du téléphone étant utilisé comme élément de sécurité.

Tous ces systèmes basés sur l'utilisation de codes d'ouverture fournis par un serveur distant, nécessitent la mise en oeuvre dans le dispositif de serrure de calculs cryptographiques. Or la réalisation de tels calculs avec la contrainte d'offrir une sécurité suffisante, nécessite la mise en oeuvre d'un microprocesseur ou microcontrôleur équipé d'un module de calcul cryptographique spécialisé, faute de quoi le temps de calcul nécessaire à la vérification d'un code d'ouverture serait trop élevé (plusieurs dizaines de secondes). Il s'avère que de tels microprocesseurs ou microcontrôleurs, dotés d'un module de calcul cryptographique, présentent un coût supérieur à dix fois le coût d'un microcontrôleur classique, sans module cryptographique, et également une consommation électrique bien plus élevée. Par ailleurs, pour des raisons de sécurité et/ou de facilité d'installation, les dispositifs de serrure nécessitant une source d'énergie doivent disposer d'une alimentation électrique autonome. Il est donc essentiel que la consommation électrique du dispositif de serrure soit aussi faible que possible.

Il est donc souhaitable de proposer un dispositif de serrure présentant un coût et une consommation électrique aussi faibles que possible, tout en offrant un niveau de sécurité élevé.

Des modes de réalisation concernent un procédé de commande d'un dispositif de serrure, le procédé comprenant des étapes consistant à : transmettre par un terminal d'utilisateur une demande de code d'ouverture à un serveur distant, contenant un identifiant d'utilisateur et un identifiant de dispositif de serrure, déterminer par le serveur si l'utilisateur correspondant à l'identifiant d'utilisateur reçu est habilité à commander l'ouverture du dispositif de serrure correspondant à l'identifiant de dispositif de serrure reçu, générer par le serveur un code d'ouverture au moyen d'une fonction cryptographique appliquée à un index et à une donnée spécifique liés à l'identifiant de dispositif de serrure reçu, ou bien à un code d'ouverture précédemment généré en relation avec l'identifiant du dispositif de serrure reçu, transmettre le code d'ouverture généré au dispositif de serrure, déterminer par le dispositif de serrure si le code d'ouverture transmis correspond à un code d'ouverture non utilisé se trouvant dans une table de codes d'ouverture mémorisée dans le dispositif de serrure, déclencher une ouverture par le dispositif de serrure si le code d'ouverture transmis est trouvé parmi les codes d'ouverture non utilisés dans la table de codes d'ouverture, et mémoriser par le dispositif de serrure que le code d'ouverture transmis figurant dans la table de codes d'ouverture a été utilisé.

Selon un mode de réalisation, le procédé comprend des étapes consistant à : émettre par le dispositif de serrure d'un état d'ouverture indiquant si l'ouverture a été déclenchée ou non à la suite de la réception du code d'ouverture, transmettre l'état d'ouverture par le terminal d'utilisateur au serveur en association avec l'identifiant de dispositif de serrure, et mettre à jour par le serveur l'index si l'état d'ouverture indique un déclenchement d'ouverture et mémoriser l'index mis à jour en association avec l'identifiant de dispositif de serrure.

Selon un mode de réalisation, les codes d'ouverture KC sont générés à l'aide de la fonction suivante :

$$KC = F^{TM-SX}(XID),$$

dans laquelle F est une fonction cryptographique $F^n(X)$ = $F(F^{n-1}(X))$, SX est une valeur d'index des codes d'ouverture KC, TM est un nombre entier supérieur à la plus grande valeur possible de l'index SX, et XID est un identifiant du dispositif de serrure.

Selon un mode de réalisation, la fonction cryptographique utilisée pour calculer les codes d'ouverture est l'une des fonctions suivantes : une fonction de hachage, une fonction de chiffrement AES, une fonction de chiffrement RSA, une fonction de chiffrement ECRSA, ou une combinaison de plusieurs des fonctions précédentes.

Selon un mode de réalisation, le code d'ouverture généré est transmis du serveur au dispositif de serrure par l'intermédiaire du terminal d'utilisateur.

Selon un mode de réalisation, le code d'ouverture généré est transmis du terminal d'utilisateur au dispositif de serrure par l'un des moyens suivants : un signal sonore émis par un haut-parleur du terminal et reçu par un microphone du dispositif de serrure, un signal lumineux émis par le terminal et reçu par un élément photosensible du dispositif de serrure, un signal radio, un couplage inductif entre le terminal d'utilisateur et le dispositif à serrure, un clavier couplé au dispositif de serrure.

Selon un mode de réalisation, les codes d'ouverture sont codés en des mots binaires de 16 à 512 bits.

Des modes de réalisation peuvent également concerner un procédé de distribution d'un colis, comprenant des étapes consistant à : requérir auprès d'un serveur distant un premier code d'ouverture d'une boite, et transmettre le premier code d'ouverture à la boite, pour déclencher l'ouverture de la boite, déposer un objet dans la boite, requérir auprès du serveur distant, un second code d'ouverture de la boite, et transmettre le second code d'ouverture à la boite, pour déclencher l'ouverture de la boite, et retirer l'objet de la boite. Selon un mode de réalisation, l'obtention des premier et second codes d'ouverture et les déclenchement de l'ouverture de la boite sont réalisés en mettant en oeuvre le procédé de commande précédemment défini.

Des modes de réalisation peuvent également concerner un dispositif de serrure comprenant organe électromécanique de verrouillage, un processeur configuré pour commander l'organe de verrouillage, et une interface de communication couplée au processeur, pour recevoir un code d'ouverture, le dispositif de serrure comprenant : une mémoire non volatile dans laquelle est stockée une table de codes d'ouverture, chacun des codes d'ouverture étant généré au moyen d'une fonction cryptographique appliquée à un index et à une donnée spécifique liés à un identifiant du dispositif de serrure, ou bien à un code d'ouverture précédemment généré, un circuit de réception pour recevoir un code d'ouverture, et un circuit de traitement configuré pour : rechercher le code d'ouverture reçu parmi des codes non utilisés dans la table de codes d'ouverture, déclencher une ouverture par le dispositif de serrure si le code d'ouverture transmis correspond à l'un des codes d'ouverture non utilisés dans la table de codes d'ouverture, et mémoriser dans la mémoire non volatile que le code d'ouverture transmis figurant dans la table a été utilisé.

Selon un mode de réalisation, le dispositif comprend un circuit d'émission, le circuit de traitement étant configuré pour émettre un état d'ouverture indiquant si l'ouverture a été déclenchée ou non à la suite de la réception du code d'ouverture.

Selon un mode de réalisation, les codes d'ouverture KC mémorisés dans la table de codes d'ouverture sont générés à l'aide de la fonction suivante :

$$KC = F^{TM-SX}(XID),$$

dans laquelle F est une fonction cryptographique $F^n(X)$ = $F(F^{n-1}(X))$, SX est une valeur d'index des codes d'ouverture KC, TM est un nombre entier supérieur à la plus grande valeur possible de l'index SX, et XID est un identifiant du dispositif de serrure.

Selon un mode de réalisation, la fonction cryptographique utilisée pour calculer les codes d'ouverture est l'une des fonctions suivantes : une fonction de hachage, une fonction de chiffrement AES, une fonction de chiffrement RSA, une fonction de chiffrement ECRSA, ou une combinaison de plusieurs des fonctions précédentes.

Selon un mode de réalisation, le circuit de réception comprend l'un des moyens suivants : un microphone pour recevoir le code d'ouverture sous la forme d'un signal sonore, un élément photosensible pour recevoir le code d'ouverture sous la forme d'un signal lumineux, un récepteur de signal radio, une bobine d'antenne pour établir un couplage inductif, un clavier pour introduire manuellement le code d'ouverture.

Des exemples de réalisation de l'invention seront décrits dans ce qui suit, à titre non limitatif en relation avec les figures jointes parmi lesquelles :

la figure 1 représente schématiquement un dispositif de serrure, selon un mode de réalisation,
les figures 2 et 3 représentent schématiquement des étapes d'une procédure d'ouverture du dispositif de serrure de la figure 1, selon divers modes de réalisation.

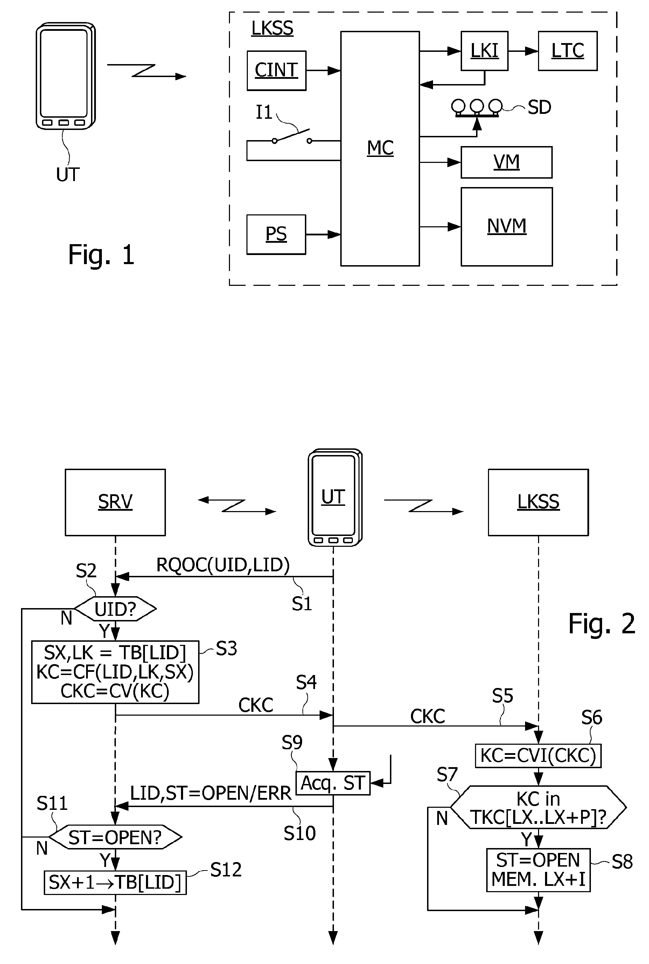

La figure 1 représente un dispositif de serrure LKSS comprenant un organe mécanique de verrouillage LTC, un processeur MC, et connectés à ce dernier, un circuit d'interface de communication CINT, une mémoire non volatile NVM, et un circuit d'interface électromécanique de commande LKI du mécanisme de verrouillage LTC. Le dispositif de serrure LKSS peut également comprendre un ou plusieurs interrupteurs I1 connectés au processeur MC et un ou plusieurs voyants lumineux SD commandés par le processeur MC. Le dispositif de serrure LKSS comprend un circuit d'alimentation PS relié à une source d'énergie autonome telle que des piles ou des batteries, qui est configuré pour générer des tensions nécessaires au fonctionnement des différents circuits du dispositif LKSS, et en particulier du processeur MC et des circuits d'interface CINT et LKI.

Le processeur MC peut être de type microprocesseur ou microcontrôleur, ou encore comprendre des circuits de calcul spécialisés, adaptés aux fonctions à réaliser. En outre, le processeur MC peut comprendre ou être connecté à une mémoire volatile VM par exemple de type RAM (Random Access Memory), dans laquelle un programme stocké dans la mémoire NVM est chargé à l'initialisation du dispositif LKSS. Le circuit d'interface de communication CINT peut être de type sonore et comprendre un microphone pour recevoir une série de tonalités sonores représentant un code numérique ou alphanumérique qui est transmis au processeur MC. Le circuit CINT peut comprendre un circuit de conversion des signaux fournis par le microphone en un code numérique ou alphanumérique ou un code binaire représentant le code numérique ou alphanumérique, ce code étant transmis au processeur MC. Ainsi le circuit d'interface CINT peut comprendre des circuits d'amplification et de filtrage du signal fourni par le microphone, et un circuit de conversion de ce signal en code numérique, alphanumérique ou binaire. La conversion des signaux fournis par le microphone peut également être effectuée par le processeur MC. La série de tonalités sonores peut être de type DTMF, et peut être fournie par le haut-parleur d'un terminal d'utilisateur UT placé à proximité du microphone.

Le circuit d'interface de communication CINT peut être de type lumineux et comprendre un élément photosensible tel qu'une photodiode pour convertir en un signal électrique un signal lumineux (ou plus généralement électromagnétique) représentant un code numérique ou alphanumérique. L'élément photosensible peut être connecté à un circuit de conversion pour convertir le signal électrique fourni par l'élément photosensible en un code numérique ou alphanumérique ou un code binaire représentant le code numérique ou alphanumérique, qui est transmis au processeur MC. La conversion des signaux fournis par l'élément photosensible peut également être effectuée par le processeur MC. Le signal lumineux peut être émis par le terminal placé à proximité de l'élément photosensible, par exemple par l'écran d'affichage ou par une diode électroluminescente du terminal UT. Plus généralement, le circuit d'interface CINT comprend un circuit de communication, lui permettant de communiquer à distance avec un terminal à proximité, ou directement avec le serveur SRV, ou encore directement avec l'utilisateur. Ainsi, le circuit CINT peut comprendre un circuit d'interface NFC, ou utiliser des ondes électromagnétiques pour établir une liaison Bluetooth, WiFi, ZigBee, Z-Wave, Thread ou WiMAX ou une liaison avec un réseau de téléphonie mobile (GSM/EDGE, UMTS/HSPA, C DMA2000, LTE). Le circuit d'interface CINT peut également comprendre un clavier permettant à un utilisateur d'introduire un code d'ouverture, par exemple affiché à l'écran du terminal UT.

L'interrupteur I1 associé à un bouton de commande, peut être prévu pour initialiser les circuits du dispositif LKSS et en particulier pour initialiser le processeur MC. Dans un souci de réduire la consommation électrique du dispositif LKSS, l'interrupteur I1 (ou un autre interrupteur connecté au processeur MC) peut être utilisé également pour réveiller le dispositif LKSS préalablement mis dans un état de sommeil dans lequel seuls les circuits nécessaires au réveil du dispositif LKSS sont alimentés par le circuit d'alimentation PS. L'état de sommeil peut être activé automatiquement après quelques instants d'inactivité du processeur MC. Bien entendu, un seul interrupteur peut être prévu à la fois pour réveiller le dispositif LKSS et pour l'initialiser, l'initialisation étant déclenchée par exemple par un appui sur le bouton associé pendant plusieurs secondes.

Les voyants lumineux SD peuvent être des diodes électroluminescentes et être prévues pour afficher un état du dispositif de serrure LKSS. Par exemple, l'un des voyants lumineux SD peut être allumé lorsque le dispositif est actif (n'est plus à l'état de sommeil) et en bon fonctionnement. L'un des voyants lumineux SD peut indiquer lorsque le processeur MC a reçu un code d'ouverture. L'un des voyants lumineux SD peut indiquer lorsque le processeur MC a détecté une erreur de fonctionnement ou un code d'ouverture erroné. L'un des voyants lumineux DS peut indiquer l'état des piles alimentant le dispositif LKSS. Bien entendu un seul voyant lumineux peut être prévu, tel qu'un voyant pouvant prendre des couleurs différentes. Différents modes d'allumage en continu ou clignotants peuvent être prévus pour indiquer différents états du dispositif de serrure. Le circuit d'interface LKI et le mécanisme de verrouillage LTC peuvent être une gâche électrique de type à commande impulsionnelle, configurés pour rester à l'état verrouillé en l'absence de tension d'alimentation, et se déverrouiller uniquement pendant la durée d'une impulsion. Le terminal d'utilisateur UT peut être un téléphone mobile, par exemple un téléphone intelligent (smartphone).

Il est à noter que le processeur MC et les mémoires VM, NVM et les circuits LKI et CINT peuvent être intégrés, au moins en partie, dans un composant unique, par exemple du type microcontrôleur.

La figure 2 représente des étapes S1 à S8 d'une procédure d'ouverture du dispositif de serrure LKSS. Cette procédure est mise en oeuvre par le dispositif de serrure LKSS, un serveur distant et un terminal d'utilisateur UT situé à côté du dispositif LKSS et ayant accès à un serveur distant SRV. Côté terminal UT, cette procédure peut être mise en oeuvre par une application dédiée, installée dans la mémoire du terminal UT, et que l'utilisateur active lorsqu'il souhaite ouvrir la serrure du dispositif de serrure LKSS. Cependant, le terminal UT peut être un simple téléphone mobile qui peut être utilisé pour appeler un serveur vocal configuré pour recevoir un code secret d'identification de l'utilisateur et pour fournir un code d'ouverture s'il reconnaît le code secret d'identification. La connexion entre le serveur SRV et le terminal UT peut également être effectuée par l'intermédiaire d'un serveur Web auquel le terminal UT peut se connecter à l'aide d'un logiciel de navigation web installé dans le terminal.

A l'étape S1, le terminal UT se connecte au serveur SRV et émet une requête RQOC de code d'ouverture contenant un identifiant LID du dispositif de serrure LKSS et éventuellement un identifiant de l'utilisateur UID demandant le code d'ouverture. Auparavant, l'utilisateur a pu s'identifier et si nécessaire, s'authentifier auprès du serveur SRV en introduisant son identifiant UID et par exemple un mot de passe. L'identifiant LID du dispositif de serrure LKSS peut être mémorisé par le terminal UT, ou bien affiché à côté de la serrure et introduit dans le terminal UT par l'utilisateur au moyen d'un clavier ou d'un capteur d'image du terminal UT. Ainsi, l'identifiant LID du dispositif de serrure LKSS peut être affiché sous la forme d'un code optique à côté de la serrure. L'identifiant LID du dispositif de serrure LKSS peut également être mémorisé par le serveur SRV en association avec l'identifiant de l'utilisateur, si ce dernier n'a accès qu'à un nombre réduit de dispositifs de serrure géré par le serveur SRV. L'application éventuellement installée dans le terminal UT peut également afficher une carte permettant de localiser la serrure (ou un groupe de serrures) à laquelle l'utilisateur a accès.

A l'étape S2, le serveur SRV vérifie que l'utilisateur correspondant à l'identifiant UID est habilité à ouvrir la serrure du dispositif de serrure LKSS correspondant à l'identifiant LID, et si nécessaire, que l'utilisateur est authentifié. Dans le cas contraire, la procédure d'ouverture prend fin. Un message d'erreur peut être transmis par le serveur SRV à l'utilisateur par l'intermédiaire du terminal UT, par exemple à l'aide d'un écran d'affichage du terminal ou sous forme sonore. Si l'utilisateur est habilité à ouvrir la serrure du dispositif de serrure LKSS, l'étape S3 est exécutée. A l'étape S3, le serveur SRV recherche une valeur courante SX d'un index et une donnée secrète LK associés à l'identifiant LID du dispositif de serrure LKSS. Le serveur SRV applique une fonction cryptographique CF à l'index SX et éventuellement à l'identifiant LID en utilisant la donnée secrète LK, pour obtenir un code d'ouverture KC. Le code d'ouverture KC peut être converti en un code secondaire CKC en fonction du mode de transmission entre le terminal UT et le dispositif LKSS. Cette conversion en code secondaire peut être également effectuée par le terminal UT, notamment si le terminal UT dispose de l'application dédiée à l'ouverture de serrures.

A l'étape S4, le serveur SRV transmet au terminal UT le code secondaire CKC ou bien directement le code d'ouverture KC si le terminal dispose de l'application dédiée. A l'étape S5, le code secondaire CKC reçu à l'étape S4 ou généré par le terminal UT à partir du code d'ouverture KC, est transmis par le terminal UT au dispositif de serrure LKSS, via l'interface de communication CINT. Le code secondaire CKC peut ainsi être transmis par exemple sous forme sonore par l'intermédiaire du haut-parleur du terminal UT, ou bien sous la forme d'un code lumineux en faisant clignoter l'écran ou une diode électroluminescente du terminal. Le code KC peut alternativement être transmis par une liaison radio (bluetooth, WiFi, ZigBee, Z-Wave, Thread, WiMAX, GSM/EDGE, UMTS/HSPA, CDMA2000, LTE) ou par couplage inductif (NFC) à l'interface de communication CINT du dispositif de serrure.

A l'étape S6, le code secondaire CKC est reçu par le dispositif LKSS, et décodé par une fonction de conversion CVI pour obtenir le code d'ouverture KC. A l'étape S7, le processeur MC recherche le code d'ouverture reçu et décodé KC dans une table de codes d'ouverture TKC, parmi des codes d'ouverture non utilisés précédemment. A cet effet, les codes d'ouverture dans la table TKC peuvent être utilisés séquentiellement, la recherche du code d'ouverture KC reçu étant effectuée à partir d'un index LX pointant sur le dernier code d'ouverture utilisé ou le premier code d'ouverture non utilisé suivant le dernier code d'ouverture utilisé. Le contenu de la table TKC et la valeur de l'index LX sont mémorisés dans la mémoire NVM. Si le code d'ouverture KC est trouvé dans la table TKC à partir de la position correspondant à l'index LX, le processeur MC exécute l'étape S8 où il déclenche l'ouverture de la serrure LTC et mémorise dans la mémoire non volatile NVM la valeur de l'index LX+1, LX étant la valeur trouvée à l'étape S7, telle que KC = TKC[LX]. De cette manière, le code d'ouverture TKC[LX] ne peut plus être utilisé pour commander l'ouverture de la serrure LTC. Dans le cas contraire, le processeur MC ne modifie pas la valeur de l'index LX stockée dans la mémoire NVM, mais peut par exemple déclencher la mise en sommeil du dispositif de serrure LKSS ou une temporisation avant d'accepter un nouveau code secondaire CKC. Après l'exécution de l'étape S8, le processeur MC peut également déclencher la mise en sommeil du dispositif de serrure LKSS. A l'étape S7, la recherche du code d'ouverture KC dans la table TKC peut consister à comparer le code d'ouverture KC aux nombres TKC[LX] à TKC[LX+P] stockés dans la table TKC, en utilisant la valeur de l'index LX stockée dans la mémoire NVM, P étant un nombre entier par exemple fixé à une valeur inférieure à 5, par exemple 3. De son côté, le serveur SRV exécute une étape S12 à la suite de l'étape S4, pour mémoriser l'index SX incrémenté de un, à utiliser pour générer un nouveau code d'ouverture pour le dispositif de serrure LKSS.

Selon un mode de réalisation, des étapes S9 à S12 (figure 2) peuvent être exécutées à la suite de l'étape S5. A l'étape S9, l'application installée dans le terminal UT (ou la page web affichée, ou le serveur vocal) demande à l'utilisateur si la serrure a été ouverte ou non, A l'étape S10, l'application installée dans le terminal UT transmet au serveur SRV un message d'état contenant l'identifiant LID du dispositif LKSS et une variable d'état ST à "OPEN" ou "ERR" selon la réponse de l'utilisateur à l'étape S9. A l'étape S11, le server SRV teste la valeur de la variable d'état ST reçue et si cette variable indique que la serrure a été ouverte, il exécute l'étape S12. A l'étape S12, le serveur SRV incrémente de un la valeur courante de l'index SX et la mémorise en association avec l'identifiant LID du dispositif de serrure LKSS. De cette manière, chaque code d'ouverture KC généré à l'étape S3 est à usage unique. En l'absence de réception du message transmis à l'état S10 sur l'état de l'ouverture de la serrure, le serveur SRV peut également exécuter l'étape S12 à la suite de l'exécution de l'étape S3.

Les codes d'ouverture calculés par le serveur SRV et figurant dans la table TKC stockée dans la mémoire NVM du dispositif LKSS, sont calculés à l'aide de la fonction cryptographique CF utilisée par le serveur SRV à l'étape S3, à la mise en service du dispositif de serrure LKSS. La fonction CF(LID, LK, SX) choisie est par exemple de la forme $F^{TM-SX}(LID, LK)$, dans laquelle F est une fonction cryptographique $F^2(X) = F(F(X))$ et $F^n(X) = F(F^{n-1}(X))$, TM est un nombre entier supérieur à la plus grande valeur possible de l'index SX. La fonction F peut être une fonction de hachage telle que SHA-1 (Secure Hash Algorithm), par exemple appliquée à l'identifiant LID concaténé avec la clé secrète LK, ou une fonction de chiffrement AES (Advanced Encryption Standard), ou RSA (Rivest, Shamir et Adleman) ou encore ECRSA (Elliptic Curve RSA), utilisant par exemple la donnée secrète LK comme clé de chiffrement. De cette manière, les codes d'ouverture KC fournis par la fonction CF présentent une distribution purement aléatoire conforme au standard NIST SP800-90 (National Institute of Standards and Technology), FIPS 140-2 (Federal Information Processing Standard) ou ANSI X9.82 (American National Standards Institute). Le nombre TM peut être choisi aléatoirement.

Ainsi, la table TKC contient les nombres suivants :

Table TKC

| |
|---|
| $F^{TM-1}(LID, LK)$ |
| $F^{TM-2}(LID, LK)$ |
| ... |
| $F^{TM-N+1}(LID, LK)$ |

(suite)

| |
|---|
| $F^{TM-N}(LID, LK)$ |

dans laquelle N correspond à un nombre maximum autorisé d'ouvertures de la serrure du dispositif de serrure LKSS. Les nombres de la table TKC (égaux aux codes d'ouverture KC autorisés générés par le serveur SRV) peuvent être codés sur des mots binaires de 16 à 512 bits, voire davantage, selon le niveau de sécurité recherché. En supposant que la serrure du dispositif LKSS puisse être ouverte 10 fois par jour pendant 15 ans, ce qui revient à stocker 54750 codes d'ouverture KC, la mémoire nécessaire est inférieure à 1 Mo pour des codes d'ouverture de 128 bits (soit 7 008 000 bits à stocker) et 2 Mo pour des codes d'ouverture de 256 bits. A l'heure actuelle, le coût d'une mémoire Flash ou EEPROM de cette capacité est comparable à celui d'un microcontrôleur sans module cryptographique. Le dispositif de serrure décrit précédemment permet donc de mettre en oeuvre des fonctions cryptographiques offrant un niveau de sécurité élevé comparable à celui des microcontrôleurs équipés de modules cryptographiques implémentant ces fonctions, sans devoir utiliser de tels microcontrôleurs. En outre, la mise en oeuvre d'une table telle que la table TKC rend la détermination de l'algorithme de cryptographie employé pour générer les codes d'ouverture KC, bien plus difficile qu'une analyse du programme exécuté par le microcontrôleur MC.

Au lieu ou en plus de mémoriser la valeur de l'index SX pour chaque dispositif de serrure qu'il contrôle, le serveur SRV peut mémoriser la dernière valeur de code d'ouverture KC qu'il a généré. Ainsi, la valeur de code d'ouverture suivante KC1 peut être calculée simplement en appliquant la fonction cryptographique F (telle que $F^{TM-SX}(LID, LK) = CF(LID, LK, SX)$) à la valeur de code d'ouverture KC mémorisée : $KC1 = F(KC)$.

Il peut se produire que les index SX et LX soient désynchronisés au point que l'index SX du serveur SRV ne se situe pas à l'intervalle de valeurs [LX, LX+P] des index du dispositif de serrure LKSS, de sorte que le code d'ouverture KC généré par le serveur SRV ne puisse pas déclencher l'ouverture de la serrure du dispositif LKSS. Cette situation peut se produire lorsque des codes d'ouverture KC générés par le serveur SRV ne sont pas utilisés pour déclencher l'ouverture du dispositif LKSS et que le serveur SRV n'est pas systématiquement informé de l'ouverture de la serrure à la suite de l'émission d'un code d'ouverture KC. Dans ce cas, l'index SX géré par le serveur SRV est supérieur à l'index LX géré par le dispositif LKSS. Il peut alors être prévu de déclencher une procédure de traitement d'erreur sur le serveur SRV, consistant à décrémenter l'index SX du nombre P.

Selon un mode de réalisation, le serveur SRV transmet l'index LX avec le code d'ouverture KC, de sorte qu'on évite tout risque de désynchronisation entre les index SX et LX. Cette mesure peut affaiblir la sécurité du système, mais peut être acceptable si le niveau de sécurité requis est moindre.

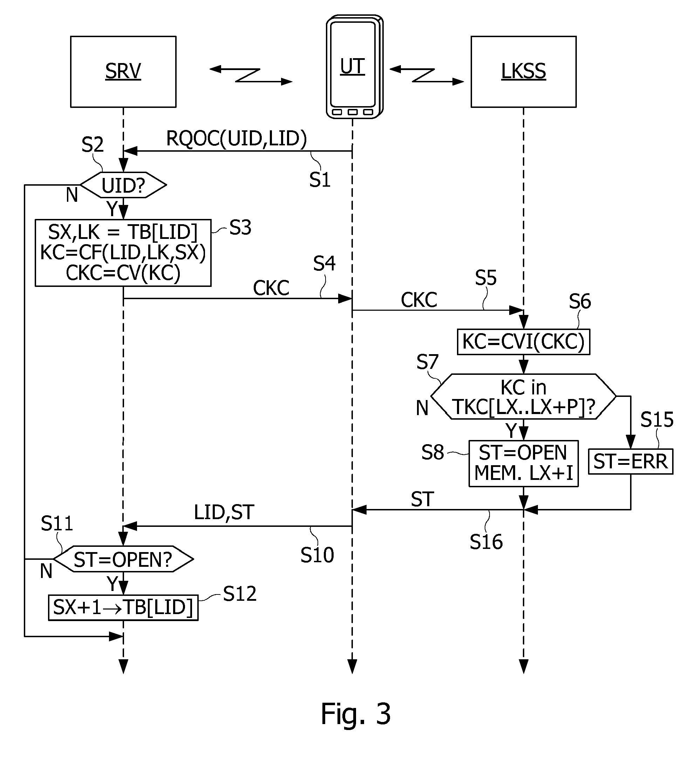

Selon un autre mode de réalisation illustré par la figure 3, la liaison entre le terminal UT et le dispositif de serrure LKSS est bidirectionnelle, de sorte que le dispositif LKSS peut transmettre au terminal UT, et en particulier à l'application dédiée installée dans le terminal, des données d'état comprenant l'état d'ouverture ou de fermeture de la serrure et/ou un code d'erreur signalant que le code d'ouverture KC transmis n'a pas été reconnu. La figure 3 représente des étapes d'une procédure d'ouverture du dispositif de serrure LKSS. Cette procédure diffère de la procédure de la figure 2 en ce qu'elle comprend des étapes supplémentaires S15 et S16 et en ce que l'étape S9 est supprimée. L'étape S15 est exécutée lorsque le code d'ouverture reçu KC ne se trouve pas parmi les codes d'ouverture non utilisés dans la table TKC. A l'étape S15, le processeur MC met la variable d'état ST dans un état d'erreur et peut déclencher une temporisation, de manière à empêcher qu'un nouveau code d'ouverture puisse être immédiatement testé. A l'étape S8, la variable d'état ST est mise à jour pour indiquer que la serrure a été ouverte. L'étape S16 qui est exécutée à la suite des étapes S8 et S15 consiste à transmettre la variable d'état ST au terminal UT. Durant l'étape S10 qui est exécutée à la suite de l'étape S16, l'application dédiée installée dans le terminal UT reçoit la variable d'état ST et la transmet au serveur SRV avec l'identifiant LID du dispositif LKSS.

Si l'application dédiée est installée dans tous les terminaux susceptibles de communiquer avec le dispositif LKSS et déclencher l'ouverture de la serrure, le serveur SRV est ainsi informé automatiquement (sans faire intervenir l'utilisateur) de l'ouverture ou non de la serrure à la suite de la transmission d'un code d'ouverture à l'étape S4. Les données d'état transmises par le microcontrôleur MC à l'application dédiée du terminal UT peuvent également comprendre un état d'usure des piles ou un indicateur signalant que les piles sont à changer rapidement. Il est ainsi possible de déclencher une opération de maintenance du dispositif de serrure LKSS, seulement lorsque cela est nécessaire.

Il est à noter que Les étapes de transmission S4, S5 et/ou S16, S10, entre le serveur SRV et le dispositif de serrure LKSS, peuvent être réalisées directement, sans faire intervenir un terminal placé à proximité du dispositif de serrure, si ce dernier est équipé d'un circuit d'interface de communication tel qu'un circuit de communication utilisant un réseau de téléphonie mobile, lui permettant de communiquer directement avec le serveur SRV. Cependant, pour des raisons de sécurité, il est préférable que l'utilisateur habilité à déclencher l'ouverture du dispositif de serrure soit à proximité de ce dernier, lorsque l'ouverture est déclenchée, et donc que la transmission du code d'ouverture (étapes S4, S5) soit effectuée par l'intermédiaire du terminal de l'utilisateur ou sur demande de ce dernier.

La procédure décrite en relation avec la figure 2 ou 3 peut être mise en oeuvre dans le cadre de la distribution d'un colis par un livreur à un destinataire qui est par exemple absent sur le lieu de la livraison au moment de la livraison. Le livreur demande au serveur SRV un premier code d'ouverture d'une boite à colis équipée du dispositif de serrure décrit précédemment (étape S1) après avoir introduit dans son terminal UT l'identifiant LID de la boite à colis ou du dispositif de serrure équipant cette boite. Le livreur peut également transmettre au serveur un identifiant (par exemple son nom) du destinataire du colis. Les étapes S2 à S8 sont ensuite exécutées pour déclencher l'ouverture de la boite à colis. Le livreur dépose ensuite le colis à livrer dans la boite à colis et la referme. Le serveur SRV ou le livreur peut avertir le destinataire du colis, qu'un colis a été déposé dans la boite à colis..

Le destinataire ou une personne habilitée se connecte au serveur SRV à l'aide de son terminal UT en lui fournissant l'identifiant du destinataire et d'autres informations telles qu'un mot de passe permettant au serveur d'identifier et d'authentifier le destinataire du colis (étape S1). Si l'authentification a réussi, le serveur SRV peut alors, à l'aide de l'identifiant du destinataire du colis, déterminer l'identifiant LID de la boite à colis à ouvrir. Ensuite, les étapes S2 à S8 sont à nouveau exécutées pour générer un second code d'ouverture de la boite à colis et déclencher l'ouverture de cette dernière, par l'intermédiaire du terminal de la personne authentifiée. A noter que la notification de livraison transmise au destinataire peut inclure le code d'ouverture de la boite à colis.

La procédure décrite en relation avec la figure 2 ou 3 peut également être mise en oeuvre dans le cadre d'une consigne comportant des caissons fermés par le dispositif de serrure LKSS. Dans ce cas, une même personne peut être amenée à déposer et retirer un objet d'un caisson. Dans cette application, l'utilisateur s'identifie auprès du serveur SRV et lui demande un premier code d'ouverture d'un caisson équipé du dispositif de serrure LKSS (étape S1) après avoir introduit dans son terminal UT l'identifiant LID. Les étapes S2 à S8 sont ensuite exécutées pour déclencher l'ouverture du caisson. L'utilisateur dépose ensuite l'objet dans le caisson et le referme. Pour ouvrir à nouveau le caisson, l'utilisateur s'identifie auprès du serveur et lui demande un code d'ouverture. Les étapes S2 à S8 sont à nouveau exécutées pour générer un second code d'ouverture du caisson et déclencher l'ouverture de celui-ci, par l'intermédiaire du terminal de l'utilisateur.

Il apparaîtra clairement à l'homme de l'art que la présente invention est susceptible de diverses variantes de réalisation et diverses applications. En particulier, l'invention n'est pas limitée à une lecture séquentielle de la table des codes d'ouverture TKC. En effet, si l'on peut s'assurer que les index SX et LX sont synchronisés, il peut être envisagé de leur appliquer une fonction de mélange, notamment pour rendre encore plus difficile la détermination de l'algorithme employé pour déterminer les codes d'ouverture KC. La fonction F de calcul des codes d'ouverture KC peut également être une combinaison de fonctions de chiffrement telles que AES, RSA ou ECRSA et de hachage telle que SHA-1, ou bien une fonction de mélange de bits appliquée au code fourni par une fonction de chiffrement.

Par ailleurs, il n'est pas nécessaire que les codes d'ouverture transmis par le serveur soient ceux figurant dans la table de codes d'ouverture mémorisée par le dispositif de serrure. En effet, il peut être prévu que chaque code d'ouverture généré par le serveur soit lié par une relation de correspondance avec un seul code mémorisé dans cette table, et réciproquement. La vérification d'un code d'ouverture reçu par le dispositif de serrure peut donc être effectuée en vérifiant cette relation de correspondance entre le code d'ouverture reçu et des codes non précédemment utilisés figurant dans la table de codes d'ouverture.

## Revendications

1. Procédé de commande d'un dispositif de serrure, le procédé comprenant des étapes consistant à :

transmettre par un terminal d'utilisateur (UT) une demande de code d'ouverture à un serveur distant (SRV), contenant un identifiant d'utilisateur (UID) et un identifiant de dispositif de serrure (LID),
déterminer par le serveur si l'utilisateur correspondant à l'identifiant d'utilisateur reçu est habilité à commander l'ouverture du dispositif de serrure (LKSS) correspondant à l'identifiant de dispositif de serrure reçu,
générer par le serveur un code d'ouverture (KC) au moyen d'une fonction cryptographique (CF) appliquée à un index (SX) et à une donnée spécifique (LID, LK) liés à l'identifiant de dispositif de serrure reçu, ou bien à un code d'ouverture précédemment généré en relation avec l'identifiant du dispositif de serrure reçu,
transmettre le code d'ouverture généré au dispositif de serrure,
déterminer par le dispositif de serrure si le code d'ouverture transmis correspond à un code d'ouverture non utilisé se trouvant dans une table de codes d'ouverture (TKC) mémorisée dans le dispositif de serrure,
déclencher une ouverture par le dispositif de serrure si le code d'ouverture transmis est trouvé parmi les codes d'ouverture non utilisés dans la table de codes d'ouverture, et
mémoriser par le dispositif de serrure que le code d'ouverture transmis figurant dans la table de codes d'ouverture a été utilisé.

2. Procédé selon la revendication 1, comprenant des étapes consistant à :

émettre par le dispositif de serrure (LKSS) d'un état d'ouverture (ST) indiquant si l'ouverture a été déclenchée ou non à la suite de la réception du code d'ouverture (KC),
transmettre l'état d'ouverture par le terminal d'utilisateur (UT) au serveur (SRV) en association avec l'identifiant (LID) de dispositif de serrure, et
mettre à jour par le serveur l'index (SX) si l'état d'ouverture indique un déclenchement d'ouverture et mémoriser l'index mis à jour en association avec l'identifiant de dispositif de serrure.

3. Procédé selon la revendication 1 ou 2, dans lequel les codes d'ouverture KC sont générés à l'aide de la fonction suivante :

$$KC = F^{TM-SX}(XID),$$

dans laquelle F est une fonction cryptographique $F^n(X) = F(F^{n-1}(X))$, SX est une valeur d'index des codes d'ouverture KC, TM est un nombre entier supérieur à la plus grande valeur possible de l'index SX, et XID est un identifiant du dispositif de serrure (LKSS).

4. Procédé selon la revendication 3, dans lequel la fonction cryptographique (F) utilisée pour calculer les codes d'ouverture (KC) est l'une des fonctions suivantes :

une fonction de hachage,
une fonction de chiffrement AES,
une fonction de chiffrement RSA,
une fonction de chiffrement ECRSA, ou
une combinaison de plusieurs des fonctions précédentes.

5. Procédé selon l'une des revendications 1 à 4, dans lequel le code d'ouverture généré (KC) est transmis du serveur (SRV) au dispositif de serrure (LKSS) par l'intermédiaire du terminal d'utilisateur (UT).

6. Procédé selon la revendication 5, dans lequel le code d'ouverture généré (KC) est transmis du terminal d'utilisateur (UT) au dispositif de serrure (LKSS) par l'un des moyens suivants :

un signal sonore émis par un haut-parleur du terminal et reçu par un microphone du dispositif de serrure,
un signal lumineux émis par le terminal et reçu par un élément photosensible du dispositif de serrure,
un signal radio,
un couplage inductif entre le terminal d'utilisateur et le dispositif à serrure,
un clavier couplé au dispositif de serrure.

7. Procédé selon l'une des revendications 1 à 6, dans lequel les codes d'ouverture (KC) sont codés en des mots binaires de 16 à 512 bits.

8. Procédé de distribution d'un colis, comprenant des étapes consistant à :

requérir auprès d'un serveur distant (SRV) un premier code d'ouverture d'une boite, et transmettre le premier code d'ouverture à la boite, pour déclencher l'ouverture de la boite,
déposer un objet dans la boite,
requérir auprès du serveur distant, un second code d'ouverture de la boite, et transmettre le second code d'ouverture à la boite, pour déclencher l'ouverture de la boite, et
retirer l'objet de la boite,
**caractérisé en ce que** l'obtention des premier et second codes d'ouverture et les déclenchement de l'ouverture de la boite sont réalisés en mettant en oeuvre le procédé selon l'une des revendications 1 à 7.

9. Dispositif de serrure (LKSS) comprenant organe électromécanique de verrouillage (LTC, LKI), un processeur (MC) configuré pour commander l'organe de verrouillage, et une interface de communication couplée au processeur, pour recevoir un code d'ouverture,
**caractérisé en ce qu'**il comprend :

une mémoire non volatile (NVM) dans laquelle est stockée une table de codes d'ouverture (TKC), chacun des codes d'ouverture étant généré au moyen d'une fonction cryptographique (CF) appliquée à un index (LX) et à une donnée spécifique (LID, LK) liés à un identifiant du dispositif de serrure, ou bien à un code d'ouverture précédemment généré,
un circuit de réception (CINT) pour recevoir un code d'ouverture (KC), et
un circuit de traitement (MC) configuré pour :

rechercher le code d'ouverture reçu parmi des codes non utilisés dans la table de codes d'ouverture,
déclencher une ouverture par le dispositif de serrure si le code d'ouverture transmis correspond à l'un des codes d'ouverture non utilisés dans la table de codes d'ouverture, et
mémoriser dans la mémoire non volatile que le code d'ouverture transmis figurant dans la table a été utilisé.

10. Dispositif selon la revendication 9, comprenant un circuit d'émission (CINT), le circuit de traitement (MC) étant configuré pour émettre un état d'ouverture (ST) indiquant si l'ouverture a été déclenchée ou non à la suite de la réception du code d'ouverture (KC).

11. Dispositif selon la revendication 9 ou 10, dans lequel les codes d'ouverture KC mémorisés dans la table de codes d'ouverture (TKC) sont générés à l'aide de la fonction suivante :

$$KC = F^{TM-SX}(XID),$$

dans laquelle F est une fonction cryptographique $F^n(X) = F(F^{n-1}(X))$, SX est une valeur d'index des codes d'ouverture KC, TM est un nombre entier supérieur à la plus grande valeur possible de l'index SX, et XID est un identifiant du dispositif de serrure (LKSS).

12. Dispositif selon la revendication 11, dans lequel la fonction cryptographique (F) utilisée pour calculer les codes d'ouverture (KC) est l'une des fonctions suivantes :

une fonction de hachage,
une fonction de chiffrement AES,
une fonction de chiffrement RSA,
une fonction de chiffrement ECRSA, ou
une combinaison de plusieurs des fonctions précédentes.

13. Dispositif selon l'une des revendications 9 à 12, dans lequel le circuit de réception (CINT) comprend l'un des moyens suivants :

un microphone pour recevoir le code d'ouverture sous la forme d'un signal sonore,
un élément photosensible pour recevoir le code d'ouverture sous la forme d'un signal lumineux,
un récepteur de signal radio,
une bobine d'antenne pour établir un couplage inductif,
un clavier pour introduire manuellement le code d'ouverture.

Fig. 1

Fig. 2

Fig. 3

Europäisches
Patentamt

European
Patent Office

Office européen
des brevets

## RAPPORT DE RECHERCHE EUROPEENNE

Numéro de la demande

EP 16 18 1713

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 282 297 A1 (OPENWAYS SAS [FR]) 9 février 2011 (2011-02-09) <br> * figure 1 * <br> * alinéa [0001] - alinéa [0002] * <br> * alinéa [0024] - alinéa [0029] * <br> * alinéa [0032] - alinéa [0033] * <br> * alinéa [0039] * <br> * alinéa [0042] - alinéa [0045] * <br> * alinéa [0054] - alinéa [0055] * <br> * alinéa [0060] - alinéa [0061] * <br> * alinéa [0066] - alinéa [0067] * <br> ----- | 1-13 | INV. <br> G07C9/00 |
| X | US 2014/035721 A1 (HEPPE TRAVIS JON [US] ET AL) 6 février 2014 (2014-02-06) <br> * figure 1A * <br> * alinéa [0002] * <br> * alinéa [0031] - alinéa [0036] * <br> * alinéa [0056] * <br> * alinéa [0069] - alinéa [0074] * <br> * alinéa [0084] * <br> * alinéa [0090] - alinéa [0094] * <br> ----- | 1-13 | |
| | | | DOMAINES TECHNIQUES RECHERCHES (IPC) |
| A | LAMPORT L: "PASSWORD AUTHENTICATION WITH INSECURE COMMUNICATION", COMMUNICATIONS OF THE ACM, ASSOCIATION FOR COMPUTING MACHINERY, INC, UNITED STATES, vol. 24, no. 11, 1 novembre 1981 (1981-11-01), pages 770-772, XP000577349, ISSN: 0001-0782, DOI: 10.1145/358790.358797 <br> * le document en entier * <br> ----- <br> -/-- | 1,3,9,11 | G07C <br> H04L |

Le présent rapport a été établi pour toutes les revendications

| Lieu de la recherche | Date d'achèvement de la recherche | Examinateur |
|---|---|---|
| La Haye | 24 octobre 2016 | Ngandu, William |

EPO FORM 1503 03.82 (P04C02)

Europäisches
Patentamt

European
Patent Office

Office européen
des brevets

# RAPPORT DE RECHERCHE EUROPEENNE

Numéro de la demande

EP 16 18 1713

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2006/170533 A1 (CHIOIU ALFRED [US] ET AL) 3 août 2006 (2006-08-03)<br>* alinéa [0002]; figure 1 *<br>* alinéa [0020] - alinéa [0023] *<br>* alinéa [0027] - alinéa [0028] *<br>* alinéa [0031] *<br>----- | 1-13 | |
| A | WO 2010/108539 A1 (FREE AG [DE]; FABER BERNHARD [DE])<br>30 septembre 2010 (2010-09-30)<br>* figures 1,2 *<br>* page 1, ligne 7 - ligne 11 *<br>* page 6, ligne 27 - page 8, ligne 2 *<br>* page 8, ligne 16 - ligne 22 *<br>----- | 1-13 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 24 octobre 2016 | Ngandu, William |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 18 1713

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-10-2016

| Document brevet cité au rapport de recherche | | Date de publication | Membre(s) de la famille de brevet(s) | | Date de publication |
|---|---|---|---|---|---|
| EP 2282297 | A1 | 09-02-2011 | EP<br>US<br>WO | 2282297 A1<br>2012157079 A1<br>2011010052 A1 | 09-02-2011<br>21-06-2012<br>27-01-2011 |
| US 2014035721 | A1 | 06-02-2014 | CN<br>EP<br>JP<br>US<br>WO | 104584026 A<br>2880584 A1<br>2015530645 A<br>2014035721 A1<br>2014022795 A1 | 29-04-2015<br>10-06-2015<br>15-10-2015<br>06-02-2014<br>06-02-2014 |
| US 2006170533 | A1 | 03-08-2006 | US<br>WO | 2006170533 A1<br>2006082526 A1 | 03-08-2006<br>10-08-2006 |
| WO 2010108539 | A1 | 30-09-2010 | CA<br>EP<br>US<br>WO | 2756088 A1<br>2411968 A1<br>2012024024 A1<br>2010108539 A1 | 30-09-2010<br>01-02-2012<br>02-02-2012<br>30-09-2010 |

EPO FORM P0460

Pour tout renseignement concernant cette annexe : voir Journal Officiel de l'Office européen des brevets, No.12/82